# EUROPEAN PATENT APPLICATION

(11) **EP 2 727 459 A1**
(43) Date of publication of application: **07.05.2014**
(21) Application number: 13003852.4
(22) Date of filing: 01.08.2013
(51) Int. Cl.: A01G 27/00, A47G 7/06, F25B 21/02

(54) **Vase for flowers and plants with an automatic system of production and irrigation of water**

(30) Priority: 02.11.2012 IT BS20120156
(71) Applicant: Costanzo, Simone, 25015 Desenzano del Garda (BS) (IT)
(72) Inventor: Costanzo, Simone, 25015 Desenzano del Garda (BS) (IT)
(74) Representative: Garavelli, Paolo

(57) **Abstract**

A vase for flowers and plants is described which, thanks to an integrated air dehumidification system, composed of a refrigeration unit, is able to produce water for plants autonomously, without being connected to any water supply or without water added by an user. Through a moisture sensor placed inside the soil, it is possible to evaluate the moisture level of the soil itself and, through a pump, to deliver the produced water to the plant until the set moisture level is reached. Independently from the plant exposure, in a sunny or shaded area, from the season, both summer and winter, and even without the presence of a person, the vase is able to provide the necessary water supply to the plant. The invention meets the needs of vegetal species in the vase and also, if it is placed inside a house or an office, is able to improve the environmental comfort, reducing air humidity and providing oxygen thanks to the symbiotic relation between the vase and the plant.

## Description

The present invention refers to a vase for flowers and plants able to produce water autonomously, without being connected to any water supply or storage tank. Such a vase provides water and a degree of soil moisture which a plant needs in a completely autonomous and automatic way.

The present invention is included in the sector of the self-watering vases and automatic watering systems, or rather systems which provide water to a plant autonomously.

In the category of self-watering vases or systems, essentially, three kinds of item are known:
A. the self-watering vases also called vases with reserve of water;
B. the automatic watering systems which are scheduled and connected to the water supply;
C. the holiday sets with reserve of water.

The present invention refers to these three categories of products, as it solves the well known problems of each kind of them.

The famous production technique of the first kind of product consists of vases which the user has to fill with a predefined quantity of water; this water is collected in the lower part of the vase, where there is a slow-release absorbent material, and where the plant roots can absorb water. The producers of these systems guarantee an autonomy of twelve weeks according to the water reserve. Actually, this value provided by the producers is not so right and often is an optimistic one, used to advertise the product, as water needs of the plant depend on many aspects, such as plant's size, season (summer, autumn, spring-summer), vase exposure, in a sunny or shaded area, and plant type. The most important problem is represented by the fact that the soil in the vase has a variable relative moisture, very high in the lower part and very low next to the surface, and this means that the roots of the plant in the lower part can absorb more water than the roots next to the surface. The difference of moisture of the soil leads the plant to develop its roots to look for its essential element of life, water, and compelling the consumer to use even more large vases as the relation between external plant and roots is unbalanced during their growth. Another important problem about this system of vases with a reserve of water, is the variable supply of water in the plant, when the reserve is full and when it is empty. The above mentioned systems can provide water only to the plant in the vase.

The second kind of products is composed of the automatic watering systems, scheduled and connected to the water supply: this means that it is like a tap connected to the water supply controlled by an electronic valve and by an electronic board. The electronic valve decides when watering in a timed manner, or for more recent versions, only when moisture of the soil is too low. The limitation provided by these systems is the need to have a water supply, for example in the terrace, which is not so common, or in the living room, which is really unusual. For the reasons indicated above, these systems represent a good solution for garden but neither for terraces nor for indoor, because it is impossible to have water supplies there, apart from bathrooms and kitchen. Another limitation of these systems is linked to the winter frosts, which freeze the pipelines (if they are outdoor), and this can block the systems for the whole day, even when the temperature is higher.

The third and last system corresponds to the holiday sets with a water reserve, composed of a tank of variable sizes which the user must fill manually; inside them, there is a pump, or in some cases, for the models without a pump, the producers advise to place them in an upper position to obtain a static pressure. These containers are connected through a set of pipelines to many plants to be watered, and a control unit which sends commands to open the valve or power the pump to irrigate the plants. The limitation of these systems is represented firstly by the fact that the water reserve is limited, so the system is valid only for short periods. In case of system without pump, the disadvantage is constituted by the fact that, as the water level diminishes, the geodetic suction head tends to reduce also the pressure of the distribution nozzles and so, from the beginning to the end of their use, the quantity of water provided to the plants is variable according to the system availability, and not to the water needs of the plants. With the pump system, the water flow is equal from the beginning to the end of the reserve. It has to be noted that these systems are often difficult to install, and for short periods of absence (two or three days) of the user, it is very disadvantageous using them.

Object of the present invention is solving all above mentioned problems by having an unlimited reserve of water without being connected to a water supply; providing the necessary quantity of water to the plant according to its specific water need; being used both outdoor and indoor, watering the plant in the vase but also the plants in the next vases, changing its production according to the needs of one or more plants, and interrupting its operation when the temperature falls below zero, this being necessary to avoid unhealthy frosts to the plant in the vase.

The above and other objects and advantages of the invention, as will appear from the following description, are obtained by a vase as claimed in Claim 1. Preferred embodiments and non-trivial variations of the present invention are claimed in the dependent Claims.

It is intended that all enclosed claims are an integral part of the present disclosure.

The present invention will be better described by some preferred embodiments thereof, given as a non-limiting example, with reference to the enclosed drawings, in which:

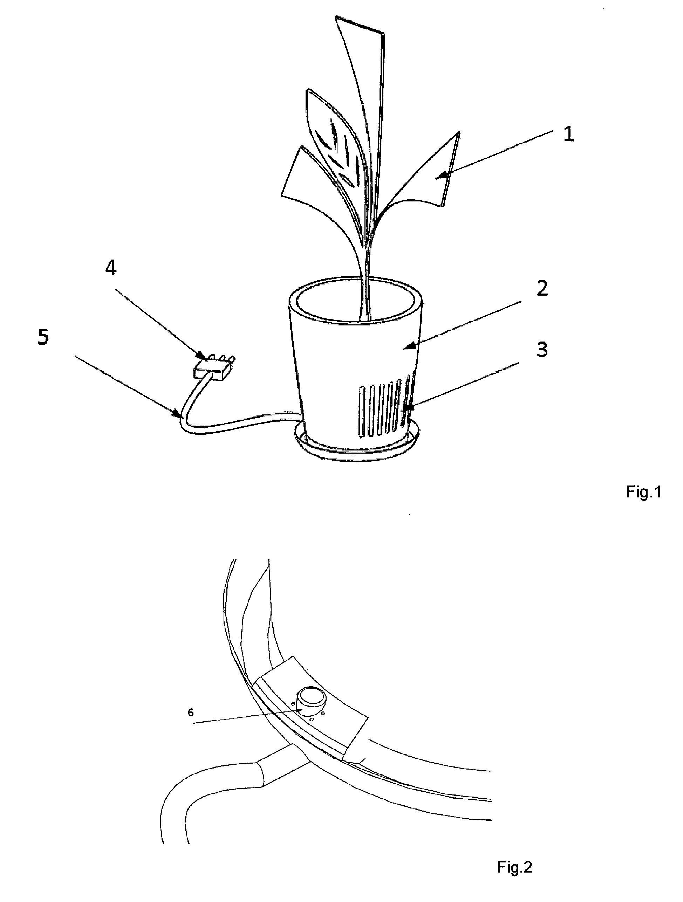

- Figure 1 is a schematic perspective view of a preferred embodiment of the vase according to the present invention;
- Figure 2 is a detailed view of part of the vase of Figure 1;

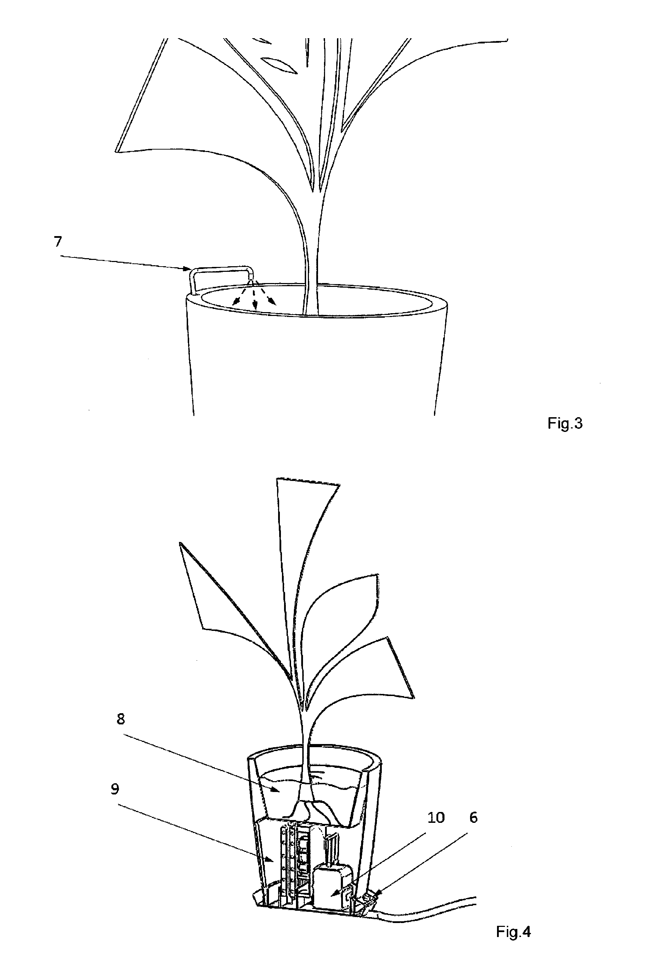

- Figure 3 is another detailed view of part of the vase of Figure 1;
- Figure 4 is a perspective sectional view of the vase of Figure 1;

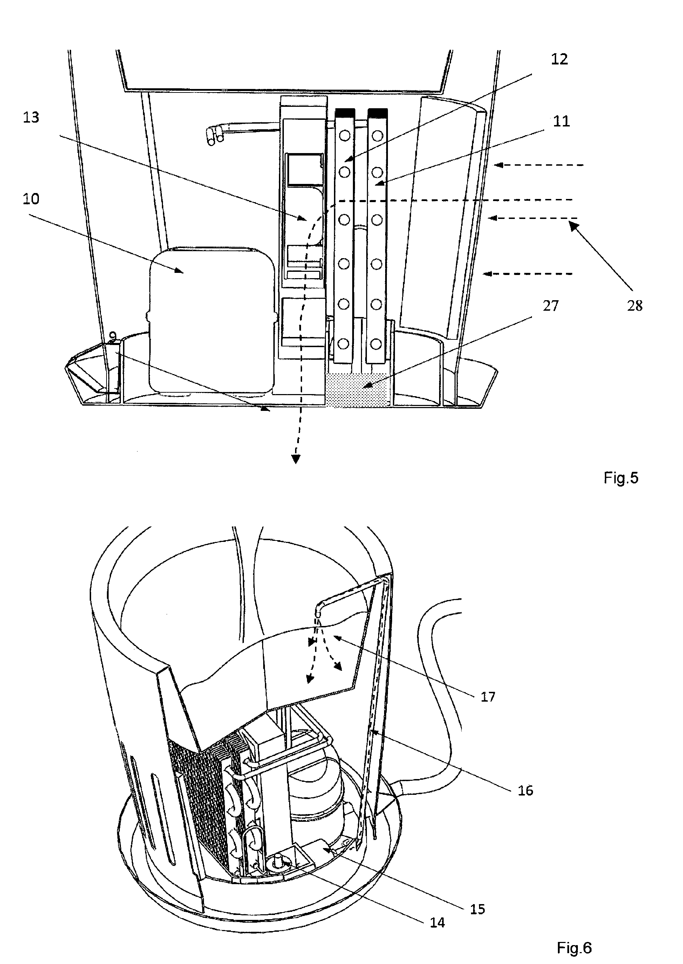

- Figure 5 is a detailed side sectional view of the interior of the vase of Figure 1;
- Figure 6 is a detailed perspective sectional view of the interior of the vase of Figure 1;
- Figure 7 is another detailed perspective sectional view of the interior of the vase of Figure 1; and
- Figure 8 is a schematic diagram of the operation of the vase of the present invention.

It will be immediately obvious that numerous variations and modifications (for example related to shape, sizes, arrangements and parts with equivalent functionality) could be made to what is described, without departing from the scope of the invention as appears from the enclosed claims.

With reference to the Figures, a preferred embodiment of the vase 2 of the invention is described; in such vase 2, a plant or flower 1 is placed with its necessary soil 8. Through the centrifugal fan 13, air is sucked, enters through the holes 3 which are in the body of the vase 2, goes through the filter 9 where it is filtered and then enters the evaporator 11, which, being cold (temperature lower than the drew point), makes the humidity present in a bowl 27 condense. Then, air goes through the condenser 12 and is sucked and expelled in the bottom of the vase 2 through the centrifugal fan 13.

Inside the vase 2, a dehumidifier is placed, composed of a refrigeration unit which condenses the water steam present in the air. The refrigeration unit is composed of a rotary or alternative compressor 10, which pushes the refrigerator gas in the condenser 12, where gas condenses and becomes a liquid. At the end of the condenser 12, liquid goes through a lamination unit (capillary or with a valve) which makes the pressure fall down. At the end of the lamination unit, liquid enters the evaporator 11 where it evaporates and subtracts heat to air, which goes through it 28; gas, at the end of this cycle, is sucked by the compressor, which pushes it again in the condenser and the cycle starts again.

The water created by the condensation of the water steam, is collected in the bowl 27 in the bottom of the vase 2. A level sensor 14 connected to the electronic board 18 switches the compressor on and off according to the water level inside it. In the soil, there is a moisture sensor 19 composed of a conductivity probe to measure the level of moisture in the soil. This moisture sensor 19 is connected to the electronic board 18, which verifies the level of moisture set with the handle 6. Through the handle, the level of moisture required by the plant is set according to its type, both tropical one, so with a high request of water, or a succulent plant with a minimum request of water.

When the signal of the moisture sensor is positive 19, the board powers the pump 15, which begins to deliver 17 water to the plant through the conduit 16. The delivery stops as soon as the prefixed moisture level is obtained. When the water level falls down inside the collecting bowl 27, the refrigerator unit starts again, to obtain the working level. In this way, the relative moisture level remains constant inside the soil for the whole day and for the whole year, independently from the presence of a person or not.

The refrigerator unit is connected to the electrical system through the power plug 4, and the electronic board 18 includes an auto-restart functionality; this function is useful especially when there are accidental power outages; the unit cannot work and therefore, it does not produce water, but when power returns, the system works again with the preset parameters: this function is especially recommended for second homes or for the unattended areas. A series of indirect advantages is to be pointed out when the invention is used indoor, and they are:
- reduction of humidity in a room: its excess reduces the thermo hygrometric comfort of people who live in rooms;
- reduction of the risk of molds in the internal walls during winter because of thermal bridges;
- it is not necessary to discharge water like with common dehumidifiers, as it is absorbed by the plant;
- totally free production of the plant oxygen in a room.

This system works, in effect, as a common home dehumidifier: it takes excessive and harmful humidity for human health and thermo-hygrometric comfort, and it provides such humidity to the plant.

Another function to be added to the product is that connecting the delivery pipe of water 16 with a suitable system of pipelines and taps, which are included in the holiday sets described in item C, water can be provided also to the next plants and therefore, to a whole flowerpot or to all plants which are in a terrace.

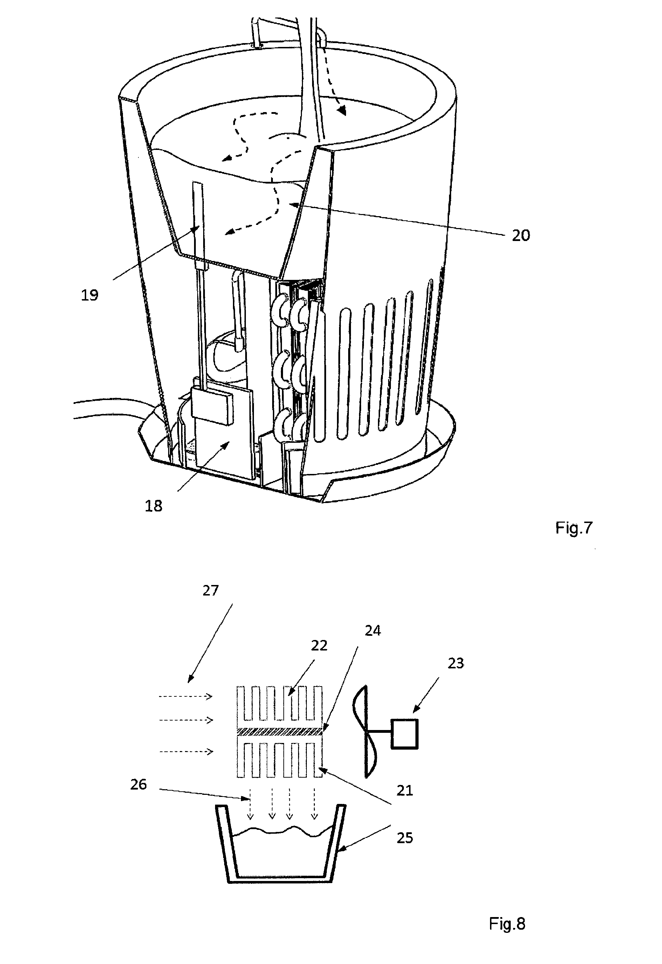

The ecological aspect of the product is another advantage of the invention which, on one hand, does not use the potable water network which sometimes can be altered with chlorine, useful for human beings but harmful for plants, and, on the other hand, the right quantity of water is provided to plants without any waste. Water is produced using electric power; nowadays, it is even more produced by renewable sources such as the sun through photovoltaic panels. In this invention, the principle of dehumidification is described through the refrigeration cycle with refrigerator compressor, but it can be also realized with thermoelectric cellsknown as Peltier's cells; to be clearer, a related drawing (as shown in Figure 8) is attached, where the following components are illustrated: cold sink 21, heat sink 22, motor fan 23, Peltier's cell 24, water holding tank 25, condensation water 26, air 27.

It has to be noted that in the current technical art, thermo-electric systems have a lower thermodynamic efficiency than the refrigerator cycle realized by gas compression and therefore, the solution of the invention with refrigerator compressor is more efficient thermodynamically for industrial and commercial purposes, and therefore also for electric absorbing of the quantity of produced water.

The refrigeration unit can be realized also with the absorbing principle: if it is necessary to produce the dehumidifying section even more silent without the compressor, but also in this case, the thermodynamic efficiency, measured in Kw/h absorbed for volume of produced water, results as an improper value compared to the compression system.

The refrigeration unit can be realized with the principle known as the molecular sieves, such as the zeolite, which are able to absorb the humidity of the room and to give it back and condense it through heating. This dehumidification technique is useful for very low air temperatures.

## Claims

1. Vase (2) for flowers or plants (1), **characterized in that** it comprises an air dehumidifier system for water production in an autonomous way and equipped with an automatic irrigation system for flowers or plants (1).

2. Vase (2) according to claim 1, **characterized in that** the air dehumidifier system is made of a compressor refrigerator (10).

3. Vase (2) according to claim 1, **characterized in that** the air dehumidifier system is made of thermoelectric cells.

4. Vase (2) according to claim 1, **characterized in that** the air dehumidifier system is made wof an adsorption refrigeration system.

5. Vase (2) according to claim 1, **characterized in that** the air dehumidifier system is made of a molecular sieve, like zeolite.

6. Vase (2) according to claim 1, **characterized in that** the irrigation system is activated by a humidity sensor positioned inside the vase ground.

7. Vase (2) according to claim 1, **characterized in that** water necessary for plants welfare is calculated with a special algorithm which correlates the soil moisture to the plant type.

8. Vase (2) according to claim 1, **characterized in that** it further comprises a centrifugal fan (13), which is adapted to suck air and make air enter through holes (3) which are in the body of the vase (2), make air go through a filter (9) where it is filtered and then enter an evaporator (11), which, being cold, makes the humidity present in a bowl (27) condense, air going through a condenser (12) and being sucked and expelled in the bottom of the vase (2) through the centrifugal fan (13).

9. Vase (2) according to claim 8, **characterized in that** it further comprises a level sensor (14) placed in the bowl (27) and connected to an electronic board (18) adapted to switch the compressor on and off according to the water level inside the bowl (27).

10. Vase (2) according to claim 9, **characterized in that** it is connected to a moisture sensor (19) composed of a conductivity probe to measure the level of moisture in the soil, the moisture sensor (19) being connected to the electronic board (18), which verifies the level of moisture set with a handle (6).

11. Vase (2) according to claim 9 or 10, **characterized in that** the electronic board (18) includes an auto-restart functionality.
